Europäisches Patentamt

European Patent Office

Office européen des brevets

⑩

(11) Publication number: **0 130 745**
**B1**

(12) **EUROPEAN PATENT SPECIFICATION**

(45) Date of publication of patent specification: **08.11.89**

(21) Application number: **84304202.9**

(22) Date of filing: **21.06.84**

(51) Int. Cl.⁴: **F 28 F 25/08, B 01 D 53/18, F 28 C 1/02**

(54) Expanded metal packing and method of manufacture.

(30) Priority: **21.06.83 US 506417**
**21.06.83 US 506534**

(43) Date of publication of application:
**09.01.85 Bulletin 85/02**

(45) Publication of the grant of the patent:
**08.11.89 Bulletin 89/45**

(84) Designated Contracting States:
**BE DE FR GB IT**

(56) References cited:
**FR-A-1 403 753**
**FR-A-2 027 505**
**FR-A-2 086 365**
**US-A-3 272 484**
**US-A-3 785 620**
**US-A-4 128 684**
**US-A-4 186 159**

(73) Proprietor: **GLITSCH, INC.**
**4900 Singleton Boulevard**
**Dallas Texas 75212 (US)**

(72) Inventor: **Chen, Gilbert**
**110 South Orange Avenue**
**Livingston New Jersey 07039 (US)**
Inventor: **Kitterman, B. Layton**
**110 South Orange Avenue**
**Livingston New Jersey 07039 (US)**
Inventor: **Glaspie, Donald L.**
**110 South Orange Avenue**
**Livingston New Jersey 07039 (US)**
Inventor: **Axe, John R.**
**110 South Orange Avenue**
**Livingston New Jersey 07039 (US)**

(74) Representative: **Bowman, Paul Alan et al**
**LLOYD WISE, TREGEAR & CO. Norman House**
**105-109 Strand**
**London WC2R OAE (GB)**

EP 0 130 745 B1

**Description**

The present invention relates to vapor-liquid contact packing and, more particularly, to corrugated contact plates disposed in face-to-face contact for use in vapor-liquid process towers.

In the vapor-liquid contact art, it is highly desirable to utilize methods and apparatus that efficiently improve the quality as well as the quantity of the mass heat transfer occurring in process towers. The technology of such process towers is replete with material designs used for tower packing. The type of packing is a function of the particular process to be effected within the tower. The packing elements may comprise a structured grid array (grid packing) arranged to form a regular array inside the column or may comprise oblique shapes dumped into and randomly arranged (dump packing) within the tower. Close fractionation and/or separation of the feed stock constituents introduced into the tower and the elimination of harmful or undesirable residual elements imparts criticality to the particular vapor-liquid contact apparatus designed. The shape of the packing elements determines the flow pattern in and density of the array and the resultant resistance to flow caused thereby. Prior art grid arrays have thus found utility in a variety of shapes, sizes and material forms in both structure arrays and dump packing configurations.

It has been found particularly desirable in the prior chemical engineering art to provide apparatus and methods affording efficient heat transfer and fluid vaporization, or vapor condensing. High efficiency, low pressure drop and reduced temperatures are the most sought after design criteria, particularly with respect to petroleum refraction operations. process towers having grid arrays for effecting such chemical reactions are generally of the character providing descending fluid flow from an upper portion of the tower and ascending vapor flow from a lower portion of the tower. Sufficient superficial area for vapor-liquid contact is necessary for the primary function and the reduction or elimination of liquid entrainment present in the ascending vapor. Most often it is necessary for the grid array to have sufficient mass and superficial area in both its horizontal and vertical planes so that fractions of the heavy constituents are conducted downwardly in condensed form and the vapors are permitted to rise through the grid with minimum impedance. With such apparatus, undesirable solids or heavy constituents of the feed stock are removed by the coaction of the ascending liquid vapor to provide a self-cleaning grid.

Generally, it is known to assemble a plurality of stacked layers affording compatible and complemental design configurations within a single column. Each layer utilizes the velocity and kinetic energy of the ascending vapors to perform the dual function of eliminating liquid entrainment in the ascending vapor and the thorough and turbulent contacting of the vapor with the descending liquid to accomplish sufficient separation, or fractionation, of the fluids into the desired components. Quick cooling of the ascending vapor is generally a prerequisite for efficient operation to effect efficient heat transfer for vapor condensation and minimum pressure drop in a minimum vertical depth of the grid. Oppositely angled corrugated plates have been utilized in the prior art for affording multiple vapor passages through the horizontal and vertical planes of the grid layers. Such complex flow patterns provide a flow of vapor and the distribution thereof within the layers which prevents maldistribution or a channeling of the vapor through only a certain portion of the layers and not others. In this manner efficient and effective utilization of the column and the energies applied therein is effected.

Prior art structures often incorporate a plurality of layers with the grid members of each layer having angularly disposed elements in contiguous contact. Each element generally has a structural configuration and angularity that permits a large upright vapor passage area in excess of fifty percent of the horizontal area of the layer. This design usually affords acceptable efficiency and vapor-liquid distribution for heat mass transfer. Such structures also by necessity provide thorough and turbulent mixing or contacting of ascending vapor and descending liquid without materially displacing either the vapor or liquid from its vertical location or flow within the grid. Such displacement would cause maldistribution or channeling of either the vapor or the liquid through certain portions of the grid or its layers, which would reduce efficiency.

The structural configuration of oppositely inclined corrugated plates of the prior art often incorporate vapor passages such as orifices through the respective plates by means of which vapor turbulence is enhanced. The orifices insure intimate vapor-liquid contact. Often they are simple holes punched in the plates and insure the ascending vapor performs a dual function of liquid contact and liquid disentrainment within close proximity to the vertical location at which the ascending vapor approaches or leaves the vapor passage orifices. In this manner, maldistribution of the ascending vapor or descending liquid is prevent, such considerations being necessary for cost effectiveness.

Oppositely inclined corrugated plates provide but one method and apparatus for countercurrent, liquid-vapor interaction. With such grid arrays, the liquid introduced at or near the top of the column and withdrawn at the bottom is brought into contact with vapor being introduced at or near the bottom of the column and withdrawn at the top. The critical feature in such methods and apparatus is to insure that the liquid and vapor achieve the desired degree of contact with each other so that the planned reaction occurs at the designed rate within controlled parameters of mass and heat transfer. The internal structure is, of course, passive in the sense that it is not power driven and has few or no moving parts. The prior art is thus replete with such passive vapor-liquid contact devices utilizing cross-fluted and perforated sheets of material in face-to-face engagement for encouraging the liquid moving through to form itself into thin films. The films have, in the aggregate, a large area over which to pass for the vapor flowing through the corrugations to engage. But the design problem is not merely a matter of providing a large surface area or a multitude of corrugations, cross-flutes, or perforations. A number of other interrelated considerations must be taken into account, some of which have been mentioned above, but which determine operational efficiency and operational effectiveness.

From a process standpoint, it is important that the desired vapor-liquid contact reaction be carried as close to completion as possible. For example, in a crude oil vacuum tower, close fractionation and good separation are needed to produce gas oil streams that are free of undesirable residual elements. As mentioned above, the contact column in its internal apparatus must thus utilize the heat supplied to the unit efficiently. In this manner it minimizes direct operating costs. This is true whether the reaction is mass transfer, heat transfer, liquid-vaporization or vapor condensing duty. With the above considerations, pressure drop is a primary consideration as is the vapor-liquid fluid interface.

While the methods and apparatus set forth above for vapor-liquid contact have been shown to be effective, certain disadvantages yet remain. In particular, vapor-liquid contact towers incorporating descending liquid flow and ascending vapor flow of the passive grid variety defined above, is generally incapable of self-regulation of internal pressure differentials. Moreover, non-homogenous vapor-liquid flow across the grid surface area is prevalent and leads to a reduction in mass heat transfer and operational efficiency. Even with a plurality of apertures disposed between substantially planar and/or cross-fluted plates of the prior art variety, vapor flow is ultimately sensitive to pressure differentials.

Pressure differentials in process columns are often imparted due to non-turbulent vapor flow and non-homogenous flow patterns through the grid structure. When vapor flow is laminar through a first fluted column and turbulent in an area around a second adjacent fluted column pressure differentials are imparted. Even when the corrugations or cross-fluted areas of adjacent plates are inclined to relatively sharp angles, one to the other, vapor flowing along any one corrugation is exposed along over fifty percent of the sidewall having substantially solid surface and a plurality of major openings defining flow channels along the second wall section thereof. Turbulence in an adjacent section, therefore, directly affects the laminar flow and imparts pressure differentials. Turbulence along all channels and all adjacent openings provides uniformity and less propensity for fluid displacement and maldistribution or channeling of either the vapor or the liquid through certain portions of the grid or its layers. Such dynamic action directly affects efficiency and mass heat interaction.

Vapor and liquid flow in the above prior art configurations has been shown to be susceptible to random flow patterns which cannot be accurately determined within the passive grid of most prior art designs. The absence of any substantial degree of uniformly imparted turbulence through the adjacent corrugations and fluted areas decreases the uniformity and homogeneity of the flow pattern throughout the grid and the programmed efficiency and mass heat transfer characteristics capable of predefined grid structures with known flow characteristics. For this reason, corrugated, continuous strips made of foil-like material having alternating smooth and finely fluted portions such as that shown in US-A-4,186,159 have been utilized in the prior art. These strips are apertured in the smooth areas and are spirally wound to form an ordered packing with a plurality of apertures formed therethrough. The flow distribution is improved along the cross-fluted areas but not uniformly across the entire surface of the corrugated strips, the apertures being in effect planar voids within a substantially planar flow area and therefore imparting little direct turbulence to either vapor or liquid. Moreover, the fluid flowing on one side is substantially confined to a single side of the plate rather than being dispersed through to the other side as would be advantageous in maximum efficiency and maximum exposure of the liquid to a vapor flow in a turbulent region.

It would be an advantage, therefore, to overcome the problems of the prior art by incorporating the advantages of face-to-face corrugated or fluted contact plates whose opposed corrugations are angled oppositely to one another with the utilization of a plate material imparting both vapour and fluid turbulence and fluid and vapour interchange through the plates for maximising efficiency. The present invention seeks to provide such enhanced vapour-liquid turbulence and interchange without adversely affecting the operational characteristics or adding pressure losses therethrough. A tower packing according to the invention comprises a stack of corrugated metal sheets in face-to-face relationship with opposed corrugations angled oppositely one to the other and arranged for receiving a descending liquid flow concomitantly with an ascending vapour flow to bring about vapour-liquid contact therebetween for mass and/or heat transfer, in which the sheets each have a plurality of relatively large spaced apart apertures formed therein for affecting the flow of vapour and liquid therealong. The sheets are of expanded metal and include a plurality of spaced apart elongate slits for enabling the liquid to flow to opposite sides of the sheets, the slits being uniformly distributed, and formed with tab regions comprising twisted land areas bent outwardly therefrom for imparting turbulence to the flow of fluid thereover.

The tabs referred to above result in the formation of turbulent liquid flow thereover and cause the flow of liquid through the slits whereby both sides of the sheets are substantially filmed over by the descending flow. The ascending vapour flow is further enhanced by the turbulence imparted thereto by the tabs.

The relatively large orifices prevent pressure pockets forming across the tower by allowing transverse flows of gases and liquids through the corrugated sheets and they also promote a transverse spreading of the liquid as it flows down the sheets. Such aperture configurations maximize the utilization of process tower technology.

For a more complete understanding of the present invention and for further objects and advantages thereof, reference may now be had to the following description taken in conjunction with the accompanying drawing in which:

Fig. 1 is an exploded perspective view of one embodiment of the methods and apparatus of the invention, illustrating a plurality of corrugated expanded metal plates being assembled one against the other;

Fig. 1A is an exploded perspective view illustrating a plurality of corrugated plates having sandwiched therebetween apertured lamella defining the interstitial notional plane;

Fig. 2 is a perspective view of the vapor-liquid contact grid assembly illustrated in Fig. 1 in an assembled configuration;

Fig. 2A is a perspective view of the vapor-liquid contact grid assembly illustrated in Fig. IA in an assembled configuration;

Fig. 3 is an enlarged top plan view of the vapor-liquid contact grid of Fig. 2;

Fig. 3A is an enlarged top plan view of the vapor-liquid contact grid of Fig. 2A;

Fig. 4 is a side-elevational, cross-sectional view of a process tower having installed therein a plurality of grid layers constructed of the corrugated contact plate as specified in the present invention and illustrating a plurality of rectangular flow apertures formed therethrough;

Fig. 5 is a top plan, cross-sectional view of the process tower of Fig. 4 taken along lines 5-5 thereof;

Fig. 6 is an enlarged fragmentary, front elevational view of an expanded metal lattice comprising a portion of one embodiment of a contact plate of the present invention and illustrating the interrelated flow network therein;

Fig. 7 is an enlarged, fragmentary front-elevational view of an alternative embodiment of the expanded metal lattice of Fig. 6;

Fig. 8 is a side-elevational, cross-sectional, fragmentary view of a portion of the expanded metal lattice of Fig. 7 illustrating the laminate construction thereof;

Fig. 9 through Fig. 17 are alternative embodiments of sidewall flow apertures formed in the sidewall of an expanded metal plate and/or lamella of the present invention adapted for imparting turbulence to the vapor-liquid flow passing thereover;

Fig. 18 is a top plan view of a material blank adapted for forming the corrugated plate of the present invention and being constructed with a plurality of staggered slits;

Fig. 19 is a perspective view of an alternative embodiment of the expanded metal corrugated plate of the present invention comprising a non-expanded slitted metal blank.

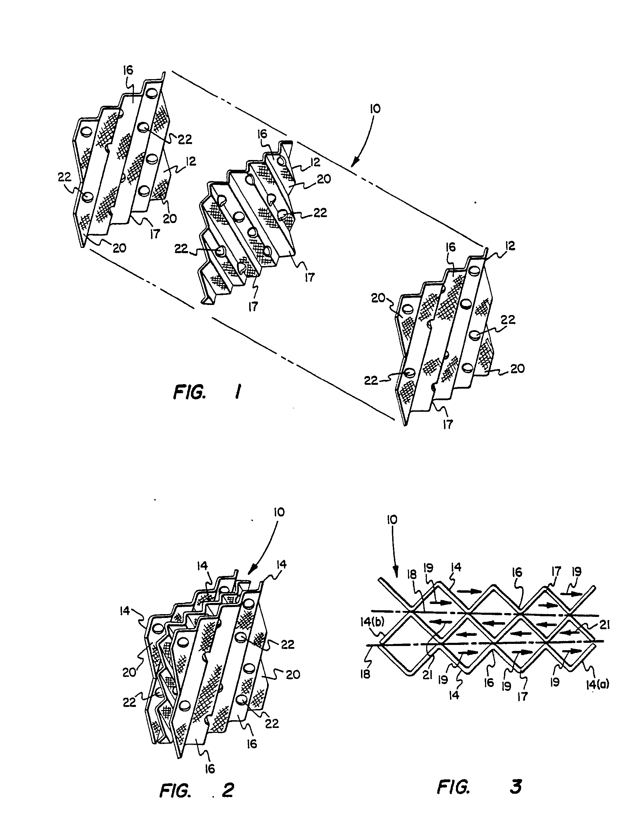

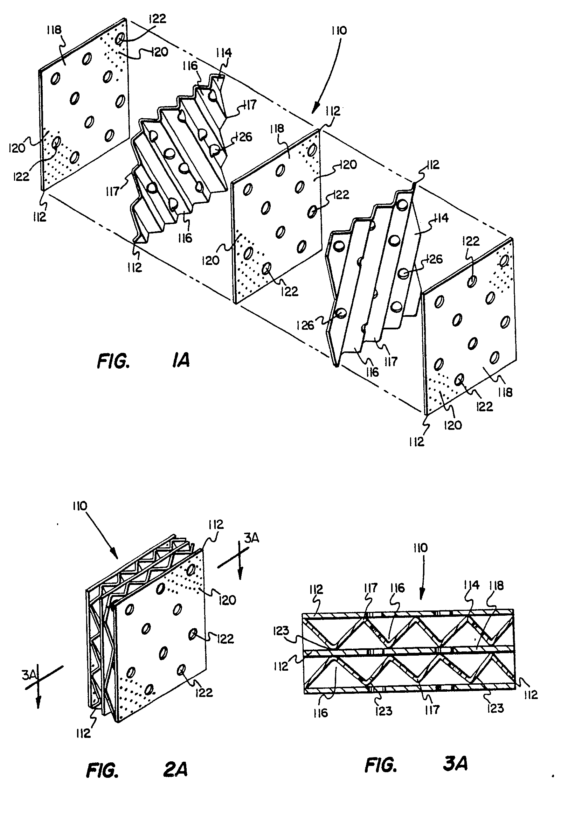

Referring first to Fig. 1 there is shown an exploded perspective view of a series of expanded metal plates of a packing element assembly constructed in accordance with the principles of the present invention. The assembly 10 comprises a plurality of expanded plate members 12 stacked in contiguous face-to-face relationship, between which vapor and liquid are subject to countercurrent flow for imparting mass and heat transfer therebetween. The manner in which the vapor and liquid flow is directed between the respective plates directly affects the vapor liquid contact, the efficiency of the operation, and forms the subject of the present invention.

The plates 12 of assembly 10 include corrugations 14 having a plurality of flow troughs or channels 16 defined between the respective corrugations crests or ridges 17 disposed thereacross in generally parallel, spaced relationship. The corrugated members 14 are positioned in face-to-face relationship one with the other with adjacent sheets preferably angulated relative to one another. In this manner vapor ascending through the stacked grid assembly 10 and passing through the corrugation channels 16 are exposed to the curved or folded sidewall surface areas of the corrugated plates 14.

Still referring the Fig. 1, the expanded metal corrugated sheets 14 illustrated therein comprises a plurality of expanded metal apertures 20 for creating a complex pattern of vapor and liquid flow over and through the sheet 14 and adjacent corrugation ridges 17. In this manner vapor ascending through the stacked grid assembly 10 and passing through the corrugation channels 16 may be exposed concurrently to the angled sidewall surface areas of the corrugated lamella 14 as well as the intermediate sidewall areas of the apertures 20. The notional plane between adjacent corrugated plates 14 may also include a lamella for further fluid transfer as set forth in FIG. IA described below.

Still referring to the embodiment of Fig. 1, the corrugated sheet 14 illustrated therein further includes a series of relatively large orifices 22. The orifices 22 afford venting between adjacent corrugations channels 16 for vapor pressure equalization and liquid flow diversion. Such vapor pressure considerations are important for establishing a homogeneous flow through the grid assembly 10 under tower operating conditions, to be defined in more detail below. Liquid descending through the grid assembly 10 is optimally spread across the material surface area including the sidewalls of the corrugation channels 16. The liquid entrained within the apertures 20 then comprise a relatively thin liquid volume enhancing exposure and vaporization to the passing vapor flow. This effect maximizes efficiency of the grid operation.

Referring now to Fig. 2 there is shown a perspective view of the grid 10 of Fig. 1 in an assembled configuration. The grid 10 shown herein comprises only a portion of a grid layer for use in a process tower as will be described in more detail below. It may be seen that the adjacent corrugated plate members 14 are stacked against one another in engagement across the corrugation edge portions 12. A plurality of flow channels 16 are thus formed in the grid 10, which channels 16 are relatively open across the notional plane between contiguous members 14. As shown herein, opposite ones of the corrugated plate members 14 are oriented oppositely, one to the other, for providing an opposed flow of vapor and liquid across the intermediately disposed plates.

Referring now to Fig. 3, there is shown a top plan view of the assembled grid section 10 of Fig. 2. It may be seen that a notional plane 18, shown in phantom lines, separates the adjacent corrugated plates 14. Vapor flowing in the respective channels 16 of each plate 14 passes upwardly and at the angle of the corrugation ridges 17. Because contiguous plates 14 are angled oppositely, one to the other, (as shown in Fig. 1), the direction of upward vapor flow of said contiguous plates is laterally opposite. Flow arrows 19 and 21 illustrate this point. Lamella 14(a) imparts a lateral flow to the right as viewed in Fig. 3, while lamella 14(b) imparts a lateral flow to the left. Since the notional plane 18 is open between said lamella, both advantageous and disadvantageous flow results can arise. One solution to such flow problems is set forth in FIGS. 1A, 2A, and 3A, wherein an intermediate lamella is placed across the notional plane 18. The sheet across the notional plane affords defined fluid flow and fluid sheeting along both sides of the plate. It may also be seen that the area of fluid flow along the notional plane comprises the greatest single wall area defined by a corrugated section 14. This condition holds true for all corrugated wall sections 14 formed with an angle of 60° or less. For corrugations 16 formed at an angle greater than 60°, the sheet disposed across the notional plane would be of less size than the "V"-shaped corrugation sidewalls. However, such a corrugation angle is not frequently incorporated due to the increase in material cost weight and altered process characteristics within a column.

Still referring to Fig. 3, the present invention addresses the inefficiencies of prior art designs utilizing angled corrugation plates 14 by providing said plates in select expanded metal configuration. This approach addresses the flow problems of an "open" notional plane by providing enhanced fluid sheeting and localized turbulence within the corrugations 14. The expanded metal sheets present a pattern of twisted lands and apertures to the countercurrent fluid flow which imparts circular and twisted patterns of fluid and vapor flow and enhances the vapor-liquid contact within the corrugation channels 16. The full sheeting and circulation of the liquid and vapor against the expanded metal walls assists in containing the vapor-liquid interaction therealong even with the vapor flow exposed to the open notional plane, as will be described in more detail below.

Referring now to FIG. 1A there is shown an exploded perspective view of sections of the intermediate lamella contact plate assembly referred to above and constructed in accordance with the principles of the present invention. The assembly 110 comprises a plurality of plate members 112 formed from stainless steel, or the like, either smooth, perforated, or textured lamella 114, stacked in contiguous face-to-face relationship. Vapor and liquid are induced to flow in opposite directions along and between the plates 114 for effecting mass and heat transfer therebetween. The manner in which the vapor and liquid flow is directed between the respective plates and along the notional plane therebetween directly affects the vapor liquid contact, the efficiency of the operation, and forms the subject of one aspect of the present invention.

The plates of assembly 110 include crimped or corrugated members 114 having a plurality of flow channels 116 defined within the respective corrugation ridges 117 disposed thereacross and in generally parallel, spaced relationship. The corrugated plates 114 are positioned in face-to-face relationship, one to the other with a lamella 118 disposed therebetween. The lamella, or sheet 118, disposed between contiguous plates 114 is in contact with adjacent corrugation ridges 117 of respective plates 114. The sheet 118 of the present embodiment further includes a slitted, pierced, or textured surface, which in FIG. 1A, includes a plurality of fluid apertures 120 affording patterns of vapor and liquid passages through the sandwiched lamella 118 and adjacent corrugation ridges 117. It should be noted, however, that the apertures 120 could be replaced with bumps or detents and that perforated, textured or smooth plate surface designs are also included within the scope of the present invention. In this manner vapor ascending through the stacked grid assembly 110 and passing through the corrugation channels 116 may be exposed concurrently to the angled sidewall surface areas of the corrugated lamella 114 and to the generally planar, fluid receptive, surface of the intermediate sheet 118. The notional plane between adjacent corrugated plates 114 thus serves as a fluid transfer surface. The apertures 120 formed within the sheet 118 then traps, diverts and, in some embodiments, establish a plurality of thin menisci of liquid during descending fluid flow. The fluid upon the sheet 118 is then exposed on two sides to opposite vapor flow patterns to maximize the efficiency of the mass heat transfer with a minimum of pressure loss and energy input.

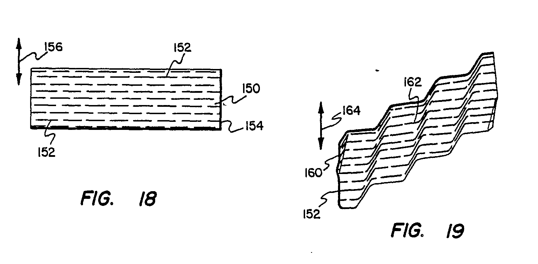

Still referring to the embodiment of FIG. 1A, the sheet 118 illustrated therein further includes a series of relatively large orifices 122. The orifices 122 are necessary elements of the present lamella construction and afford venting and divert flow between adjacent corrugations channels 116 for vapor pressure equalization. Such vapor pressure considerations are important for preventing maldistribution of flow through the grid assembly 110 under certain tower operating conditions, to be defined in more detail below. Liquid descending through the grid assembly 110 is optimally spread across the material surface area including the sidewalls of the corrugation channels 116 and the generally planar surface area of the sandwiched lamella. The liquid entrained by the bumps or apertures 120 then comprise a relatively thin liquid volume enhancing exposure and vaporization to the passing vapor flow. This effect maximizes efficiency of the grid operation. The apertures 120 may also be presented in the form of slits, slots, or louvers as shown in FIG. 18 and described below. A plurality of larger apertures 126 are likewise formed within the corrugated plates 114 for concomitant vapor pressure equalization, flow diversion, and enhanced vapor-liquid contact as will be discussed in more detail below.

Referring now to FIG. 2A there is shown a perspective view of the grid 110 of FIG. IA in an assembled, "sandwiched" configuration. The grid 110 shown herein comprises only a portion of a grid layer for use in a process tower such as that set forth in FIG. 2. It may be seen that the plates 118 separate the adjacent corrugated plate members 114 and are sandwiched therebetween in engagement with the corrugation edge portions 117. A plurality of discrete flow channels 116 are thus formed in the grid 110 as defined by the plate 118 and the contiguous corrugation edge 117. Without the insert plate 118, the corrugated region 116 would be open to the corrugation 116 of the facing plate 114 across the notional plane therebetween. The lamella 118 of the present invention tangibly defines the notional plate and consequently provides a substantial surface for the flow of liquid thereacross. Opposite ones of the corrugated plate members 114 are oriented oppositely one to another for providing an opposed flow of vapor and liquid across the intermediately disposed plates.

Referring now to FIG. 3A there is shown a top plan view of the assembled grid section 110 of FIG. 2A. It may be seen that the lamella 118 discretely separates the adjacent corrugated plates 114. This separation across the notional plane affords defined fluid flow and fluid sheeting along both sides of the plate 118. It may be seen that the area of fluid flow along the notional plane comprises the greatest single wall area defined by a corrugated section 114 as stated above. This condition holds true for all corrugated wall sections 114 formed with an angle of 60° or less. For corrugations 116 formed at an angle greater than 60° the lamella 118 disposed across the notional plane would be of less size than the "V" shaped corrugation side walls. However such a corrugation angle is not frequently incorporated due to the increase in material cost weight and altered process characteristics within a column.

It has thus been found to be most desirable to incorporate corrugations having an angle of formation less than 60° for maximum efficiency in vapor liquid contact. In such configurations the lamella 118 disposed in the notional plane between adjacent corrugated plate members 114 provides not only the maximum wall surface area for each flow channel but further increases the number of connecting flow points within the grid assembly 110. For example, the sheet 118 is sandwiched between adjacent corrugated plates 114 so that the edges 117 of each engage the sheet continuously therealong. This continuous engagement strip affords an elongated series of contact points across which fluid flow can migrate and vapor-liquid contact can be enhanced. Moreover the inner section of the sheet and the corrugation edge 117 form a narrow elongated corner 123. The surface tension of liquid causes the descending fluid to form in the corners 123 along the plate intersections and thus establish a channel of flow that can continuously feed flow to other areas of the sheet 118 and corrugated plates 114. Such feed flow lines along both edges of the corrugation channel 116, as shown in FIG. 3A, is highly desirable and may be shown to be an effective way of providing homogeneous liquid flow throughout the grid 110 when constructed in accordance with the present invention.

Still referring to FIG. 3A, it may further be seen that the lamella 118 comprises a substantially planar, apertured surface area for the flow of liquid thereacross as compared to the substantially angled side wall regions of the corrugations 116. A more uniform liquid flow is thus provided across the sandwiched sheet than might otherwise be afforded across the curved and inclined walls of the corrugations. The uniform sheeting action of the flowing liquid is both programmable and a consistent flow aspect of the grid 110. Such sheeting flow may also be characterized as laminar across substantial body portions thereof as compared to the flow across the inclined walls of the corrugated plates 114. Such flow may manifest itself in channeled flow areas of a non-homogeneous or laminar layer across the surface material of the corrugations. With a planar, apertured wall of the sandwiched sheet 118, the flow can both be predicted and programmed for maximum efficiency and vapor liquid contact.

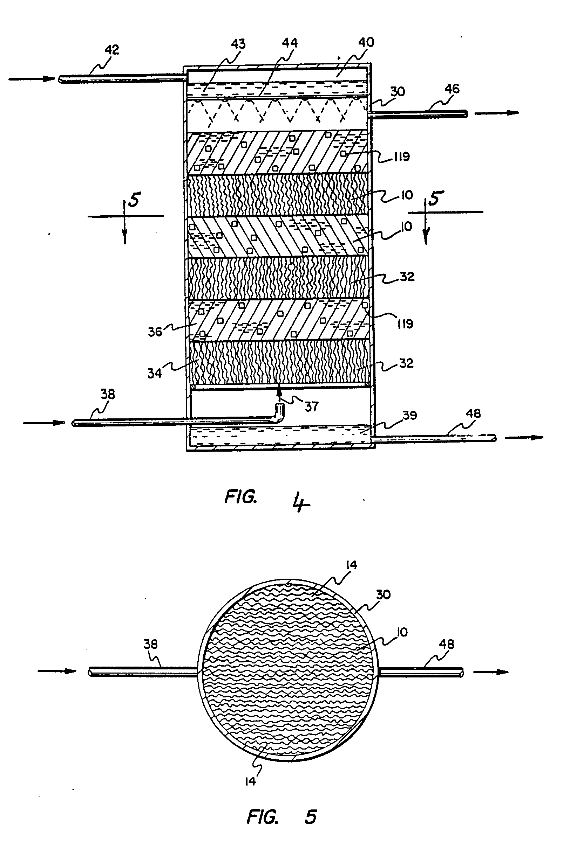

Referring now to Fig. 4, there is shown a side-elevational, cross-sectional view of a process column 30 having a stack 10 of grid layers 32, 34, 36 constructed generally in accordance with the principles of the present invention. Grid layers 32 are comprised of a plurality of plate sections such as that shown in Figs. 2 and 3. The outer periphery of the multiple layers is contoured to fit within the process tower 30 which, in the present embodiment, is circular in cross-section. Adjacent grid layers 32 within the column are preferably oriented orthogonally one to the other to further enhance the vapor-liquid contact and turbulence of fluids passing therethrough.

Still referring to Fig. 4, a first grid layer 34 is thus shown adjacent a second, upper grid layer 36 oriented orthogonally to the first whereby the sheet perforations of the lower layer 34 are illustrated in contrast to the edge portions of the sheet 36 and plate members 14 of said upper grid layer. The column is constructed for affording the entry of vapor 37 through a lower vapor flow line 38 positioned near the bottom 39 of the column. The upper region 40 of the tower 30 is likewise fitted with a liquid flow line 42 for affording the ingress of the liquid 43 to be processed within said column. The liquid entry from the fluid flow line 42 is dispersed across the upper grid layers 32 by spray or dispension heads 44 to initiate homogeneous, descending liquid flow patterns across the stacked grids 10. Similarly, the vapor 37 is introduced in the lower regions 39 of the column for homogeneous distribution therearound and the ascension thereof through the stacked grid layers 32 for heat and/or mass transfer with the descending liquid 43. The vapor 37 is vented near the top of the column 30 through exhaust line 46 while the excess liquid 43 collected at the bottom of said column is permitted to drain through line 48.

Referring now to Fig. 5, there is shown a top plan view of the column of Fig. 4 taken along line 5-5 thereof. The flow lines 38 and 48 are shown in conjunction with the assembled grid layers. The grid layer 32 is shown in cross-section and comprises a circular body having a plurality of stacked plates 14 and sheets 18 in face to face engagement thereacross.

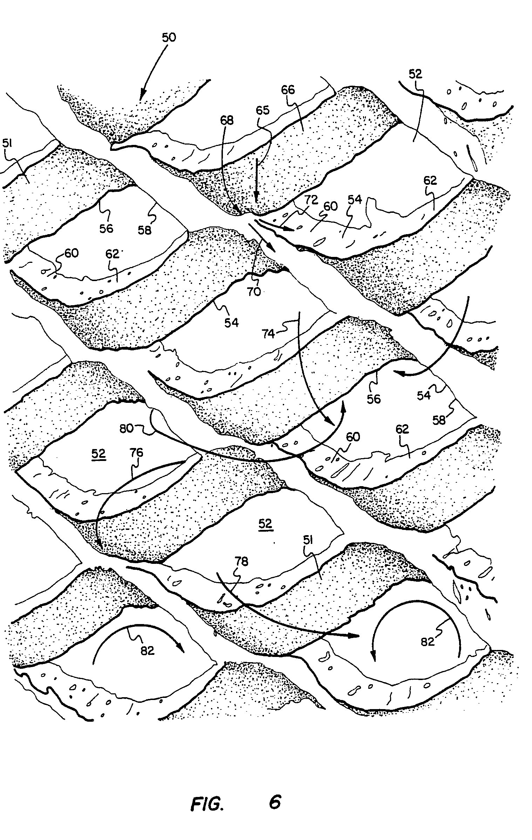

Referring now to Fig. 6, there is shown an enlarged front elevational fragmentary view of one embodiment of the corrugated flow plate 14 of the present invention. The plate 14, formed of expanded metal is shown in a magnified view which illustrates the fluid flow patterns which occur thereacross. The expanded metal body, or lattice 50, is comprised of an interconnected series of twisted and deformed lands 51 defining generally rectangular apertures 52 therebetween. Each twisted land 51 is comprised of four elongated sidewall surfaces 54. The four surfaces 54 are bent and twisted during plate formation to afford an interconnected flow path of varying degrees of angulation and inclination relative to the vertical fluid flow. The twisted land portions are also capable of carrying fluid and vapor flow from one side of the corrugated plate 14 to the other during vapor fluid flow thereacross.

The sidewall surfaces 54 of the expanded metal lattice 50 each comprise a first upper face 56, a second lateral face 50, a first bottom side face 50, and a bottom face 62. The various surfaces 54 are shown most clearly in Fig. 6 and are generally rough and pitted due to the method of formation. The faces 56, 58, 60 and 62 are curved and twisted both into and away from the opposite sidewalls of the plate 14 whereby fluid flowing therealong is diverted onto various ones of the flow faces and, in some instances, transferred to the opposite side of the expanded lattice 50. Because the surface is made of metal, wetting is facilitated, and laminar fluid filming thereacross is enhanced by the twisted fluid flow path over the surfaces of each of the angled lands 51. The curved and jagged formation of land faces 56, 58, 60 and 62 further serves to disturb laminar vapor flow across the plate 14 for imparting turbulence thereto and exposing the descending liquid flow to the turbulent vapor for improved mixing.

Still referring to Fig. 6, there is shown a typical flow pattern designated by arrows 65 whereby the flow of descending liquid 43 may be viewed relative to the flow path of ascending vapor 37. A typical flow pattern of descending liquid 43 brings it down a first land 66 where it is separated along an interface 68 between side land along arrow 70, and bottom face 60 along arrow 72. The liquid 43 flows in a film across both surfaces and may be carried to the opposite side of the lattice 50. This is one of a myriad of flow patterns. The fluid flowing along the lands 51 intersects and merges with the flow from adjacent lands 51 from the opposite side of the lattice 50, and from surfaces 54 of apertures 52. The flow patterns can thus form swirls of liquid flow as shown by arrows 74, 76, and 78. The swirls of arrows 74 and 78 indicate liquid circulating around lands 51, which flow is highly advantageous for effective vapor-liquid engagement.

Still referring to Fig. 6, the pitted and jagged metal surface areas are typical of expanded metal which is deformed beyond its point of elastic deformation to take a plastic set in the select expanded and corrugated configuration. The jagged edges may be seen to impart turbulence to both the countercurrent vapor and liquid flow patterns. In this manner, maximum heat-mass transfer through the vapor-liquid flow is effected. Vapor turbulence also effects the liquid flow and another flow pattern of circular liquid flow 80 around the lands of adjacent apertures 52 may be established. Circular liquid or vapor flow may also be created in the pattern of arrows 82 due to the turbulence and flow channeling features of the expanded metal lattice 50 which, in conjunction with its angulation relative to an adjacent corrugated lattice, affords directionality to the ascending vapor 37. This condition creates circulating vapor and/or liquid flow regions passing between adjacent apertures 52. Such circular flow comprises maximum turbulence and greatly facilitates mass transfer particularly in the condition of an "open" notional plane between adjacent plates 14. Vaporization of the descending liquid in any particular area is readily replenished from the convoluted, interconnected flow patterns afforded in the present invention. This aspect, in conjunction with the wetting parameters of the metal, greatly enhances the operational characteristics of the present invention. Moreover, the expanded metal is capable of relieving residual stress during formation to reduce the propensity of corrosion often found in cold formed metal packing elements of conventional prior art designs. Residual stress is a known factor of corrosion when such metal bodies are exposed to many of the standard corrosive chemicals commonly utilized in fractionation processes in such stacking columns.

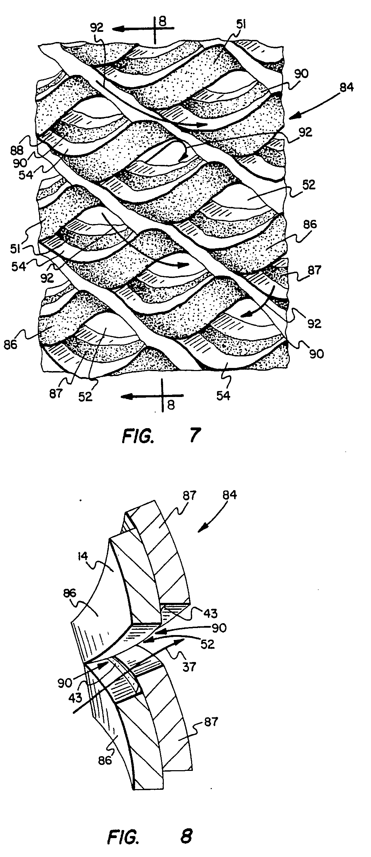

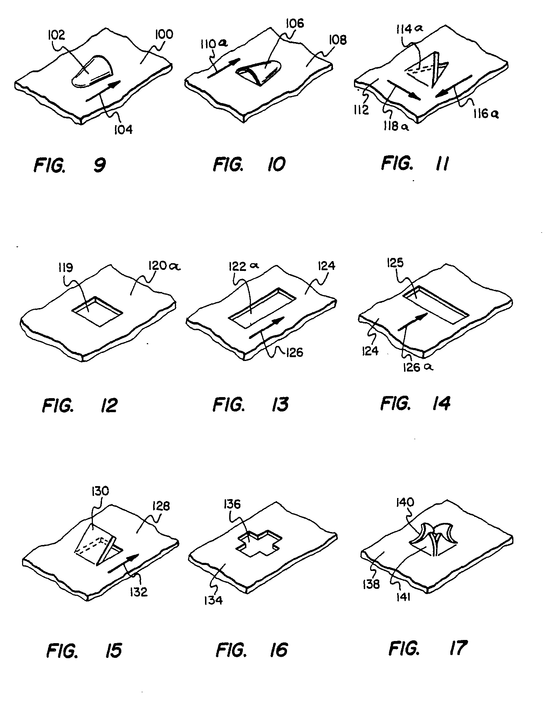

Referring now to Fig. 7, there is shown an alternative embodiment of an expanded metal corrugated lattice 50 constructed in accordance with the principles of the present invention. Lattice 84 is constructed from a pair of expanded metal blanks 86 and 87 laminated one to the other whereby the sidewall configuration of the resulting apertures 52 includes an offset wall region 88 with an abutment channel 90 formed therearound. The channel 90 is comprised of the intersection of the sidewalls 54 and land 51 of the respective expanded metal laminants 86 and 87. The channel 90 traps liquid 43 flowing therearound through capillary action or the like. The entrained liquid 43 within the laminate wall region 90 affords numerous advantages in vapor-liquid contact by presenting a liquid surface integral with the expanded metal plate, which liquid is actually retained by capillary action. The corrugation formation of the plate 84 further deforms and offsets the wall region due to natural expansion properties. This deformation further enhances the entrapment channel configuration. Sheets of slitted or slotted metal expanded into the plate configuration shown herein will thus provide vastly improved liquid entrainment properties, which entrainment may be seen to be typical of the entire land region surrounding the expanded metal apertures 52. In this manner, a sheet of expanded metal, as set forth herein, may be seen to present a dual face of filmed over and entrapped liquid. The liquid exposure may be seen to be of a degree not heretofore possible. The amount of liquid entrainment is, in essence, a complete magnitude greater than conventional corrugated plates incorporating simple aperture formation for flow diversion. In this manner, the ascending vapor flow, countercurrent to the liquid flow, is literally channeled into turbulent flow patterns by the offset presence of the liquid 43 about the twisted lattice 4 comprising the expanded metal grid. This feature greatly promotes mass and heat interchange between the vapor and liquid.

Still referring to Fig. 7, it may be seen that the twisted lattice 84 likewise affords multiple flow paths for descending liquid. It may be seen again by way of arrows 92 illustrating the descending liquid flow that the fluid is likewise channeled into, through, and around the sidewalls and upper edges 54 of the various expanded lattice apertures 52. Vapor 37 is likewise diverted into the edges of the apertures 52 where liquid 43 is entrapped in the sidewall channels 90 of the adjacent laminates.

Referring now to Fig. 8, there is shown a fragmentary side elevational view of an enlarged aperture section 52 with upper and lower channels 90 clearly shown. Laminate plates 86 and 87 are offset, one to the other, from the expansion during formation. Liquid 43 is shown entrained within upper and lower channels 90. Vapor 37 passing over the plate 14 may even pass through the aperture 52 to contact the liquid entrainment therein. Even when vapor 37 does not pass through the aperture 52, the presence of entrained liquid 43 enhances the flow of descending liquid thereover and through the lattice 84 to effect the circular flow patterns discussed above. Such flow patterns and fluid presence are integral to maximum vapor-liquid contact efficiency.

Referring now to Figs. 9 through 17 collectively, there are shown various embodiments of the aperture and/or tab construction proved in the plates 14 or notional plane lamella 18. It should be understood that the plates or lamella shown in Figs. 9 through 17 may be constructed of either solid, smooth, textured, slitted, or expanded metal configurations although solid configurations are shown in each of the drawings for purposes of clarity.

Addressing first the slotted configuration of Fig. 9, there is shown a plate section 100 having a tabbed aperture 102 formed therein and oriented to the direction of fluid flow shown by arrow 104. The tabbed aperture of Fig. 9 is comprised of a slitted and coined portion which protrudes outwardly in a semi-conical configuration for diverting the flow of vapor and liquid and imparting turbulence to the flow. Similarly, Fig. 10 is shown comprising a tabbed aperture 106 upon a lamella section 108 with the direction of fluid flow shown by arrow 110a. It may be seen that fluid flowing in the direction 110a will be received into the tabbed aperture 106 and channeled therethrough into the opposite side of the lamella 108. Likewise, the various tabbed apertures shown herein may be provided upon either the corrugated plates 14 of the present invention or upon the insert lamella 18. In these various tab structure configurations, the fluid flow parameters and operational characteristics may be selectively altered for precise flow characteristics and the particular constituents used within a process column 30. For this reason a variety of tabbed apertures are shown herein illustrating the varieties of fluid flow and turbulence which may be generated.

Referring now to Fig. 11 there is shown a plate 112 having a triangular, tabbed aperture 114a formed thereon. Fluid flow in the direction shown by arrow 116a will be received within the triangular tabbed aperture while flow laterally thereto, in the direction show by arrow 118a, may be partially diverted and partially received within the aperture. Likewise Fig. 12 illustrates a generally square aperture formed without a tabular region within a plate 120a. The square aperture 119 has various fluid flow diverting characteristics contrasting that of a circular aperture and that of a aperture having a tabbed region upstanding therefrom. Fig. 13 illustrates a rectangular aperture positioned longitudinally to the direction of flow. The rectangular aperture 122a formed upon plate 124 is oriented for diverting longitudinal flow as shown by arrow 126a. In this configuration, flow is substantially diverted and that which proceeds into the aperture may be carried to the opposite side of the plate 124. The advantages of such cross fertilization from one side to the other side of the flow plates has been set forth above. Addressing now Fig. 14, the plate 124 is shown with a rectangular aperture 125 of equivalent size to that shown in Fig. 13 but oriented generally orthogonal thereto for imparting a substantially different fluid flow effect to a fluid flow propogating in the direction of arrow 126a.

Referring now to Fig. 15 there is shown a plate 128 having a generally rectangular tabbed aperture 130 formed therein. Fluid flowing in a first direction 132 may be seen to be diverted substantially by said tabbed aperture 130 as shown in Fig. 11. However, again the fluid diverting affects are considered in conjunction with the fluid circulating effects for fluid received through the aperture into the opposite side of the plate 128.

Referring now to Fig. 16 there is shown a plate 134 having a cross shaped aperture 136 received therein. The aperture 136 is capable of diverting various directions of fluid flow much like a circular aperture but with the capability of retaining various fluid accumulations along the corners thereof. Finally, addressing Fig. 17 there is shown a plate section 138 having a tabbed aperture 140 comprised of a plurality of flanged regions 141 folded outwardly of the tabbed 140 for substantially diverting and preventing the transfer of liquid therethrough but permitting the passage of vapor. Such an aperture may be advantageous for certain vapor liquid and/or mass heat exchange characteristics desired for certain chemical reactions in a process column.

Referring now to Fig. 18 there is shown a top plan view of a material blank comprised of slit construction and adapted for utilization in the present invention. The slitted construction includes a plurality of slits formed in parallel space relationship and staggered one to the other along a longitudinal direction for affording a laminar fluid flow when disposed in a vertical configuration. The plate 150 of Fig. 18 includes slits 152 formed in rows 154 which are generally in parallel spaced relationship and which may be expanded through stretching in the direction of arrow 156. The material may also be provided in a slit or slotted configuration for use as a lamella 18 to be disposed within the notional plane between adjacent and corrugated plates 14. Likewise the configuration shown in Fig. 18 may be used in the embodiment shown therein as a plate construction for the corrugated assembly of plate 14. The slits or slots 152 formed therein may be seen to provide various advantageous capillary effects and lateral entrainment of the liquid descending thereacross for purposes of vapor liquid interface reaction.

Referring now to Fig. 19 the material blank of Fig. 18 is shown in a crimped and/or corrugated configuration. The slits 152 of the corrugated plate 160 shown in Fig. 19 and including a plurality of corrugations 162 capable of diverting fluid flow or the construction of expanded corrugated plates by vertical expansion in the direction of arrow 164. It is conventional in the prior art to expand metal by first slitting and/or slotting said metal forming and/or coining and expanding said metal. Various steps in the coining, expanding, slitting and slotting processing steps may be altered for a particular flow configuration. As set forth above, the particular twisted and turned land configuration resulting from slitting and slotting has various advantages heretofore unavailable in prior art configurations for vapor liquid contact towers.

Referring again to Fig. 4, the process column 30 is shown with a plurality of grid layers 32 having the angulated corrugated plates 14 disposed therein with rectangular apertures 119 shown through said corrugated plates for purposes of illustration. The flow characteristics and chemical reactions concommitedly provided by the shape of these apertures may be shown to enhance the specific vapor liquid contact parameters necessary for select chemical reactions. Likewise, the orientation of the tabular aperture configurations shown in Figs. 9 through 17 have been shown to be particularly useful in "tuning" a process tower corrugated plate and/or lamella configuration for specific vapor liquid contact operation. By utilizing these parameters and the teachings of the present invention, the process tower of the prior art may be utilized in an enhanced and much efficient configuration whereby specific flow configurations and turbulence levels may be interfaced with known laminar boundary characteristics for a particular grid array. With such flow characteristics and the developed parameters for the various tabular orientations relative to the corrugated expanded metal and/or plate materials incorporated into process tower, numerous advantages may be experienced with regard to operational environments.

**Claims**

1. A tower packing comprising a stack of corrugated metal sheets (14, 150) in face-to-face relationship with opposed corrugations angled oppositely one to the other and arranged for receiving a descending liquid flow concomitantly with an ascending vapor flow to bring about vapor-liquid contact therebetween for mass and/or heat transfer, said sheets each having a plurality of relatively large spaced apart apertures (22) formed therein for affecting the flow of vapor and liquid therealong characterised in that the sheets are of expanded material and include a plurality of spaced apart elongate slits (152) for enabling the liquid to flow to opposite sides of said sheets (160), said slits being uniformly distributed, and formed with tab regions comprising twisted land areas bent outwardly therefrom for imparting turbulence to the flow of fluid thereover.

2. A tower packing according to Claim 1 characterised in that said slits (152) are spaced from one another in generally parallel rows (154).

3. A tower packing according to Claim 1 characterised in that said slits (152) are formed with the slits in adjacent rows being longitudinally offset from one another into alignment with the spaces between the adjacent slits in a staggered array configuration.

4. A tower packing according to any preceding Claim characterised in that said opposed corrugations (17) are inclined generally orthogonally one to the other and said elongate slits (152) extend perpendicularly to the axis of the tower packing.

5. A tower packing according to any preceding Claim characterised in that each of said elongate slits includes a coined portion protruding outwardly from the plane of said sheet and extending from said slit in the direction of liquid flow along said sheet.

6. A tower packing according to Claim 5 characterised in that the coined portions of the slits in alternate rows protrude outwardly from the plane of said sheet in opposite directions.

7. A tower packing according to any preceding Claim characterised in that the said corrugated sheets are disposed in face-to-face contact.

8. A tower packing according to any of Claims 1 to 6 characterised in that each adjacent pair of said corrugated sheets (14) is separated by an apertured planar sheet (18) with which said corrugated sheets are in face-to-face contact.

9. A tower packing according to Claim 8 characterised in that the apertures (122) in each planar sheet comprise slits (152).

10. A method of providing vapor liquid contact within a process tower comprising the steps of providing a tower having means for ingressing the flow of vapor at the lower region thereof, means for ingressing a stream of liquid at the upper region thereof and a series of layers of grid sections comprising generally vertically oriented corrugated sheets (14) in face-to-face relationship with corrugations of adjacent sheets being angled one to the other between said liquid and vapor ingressing means for receiving the descending flow of liquid and the ascending flow of vapor concomitantly therethrough, said sheets each having a plurality of relatively large spaced apart apertures (22) formed therein for affecting the flow of vapor and liquid therealong, characterised in comprising the steps of providing said grid layers with a plurality of expanded metal sheets, positioning said sheets in an inclined position opposite one to the other, providing said sheets with a plurality of parallel, elongate, spaced apart slits (152) formed therein, said slits being formed with tab regions comprising twisted land areas bent outwardly therefrom so as to impart turbulence, along with a transverse spreading effect, to the liquid flowing down and through said sheets.

11. A method according to Claim 10 which includes providing said slits in adjacent parallel rows (154) with each slit being in alignment with a space between slits in the adjacent rows to enhance the spreading effect to the liquid flowing down said sheet.

**Patentansprüche**

1. Turmpackung mit einem Stapel einander gegenüberliegender gewellter Metallbleche (14, 150), deren gegenüberliegende Wellungen entgegengesetzt zueinander gewinkelt sind und die angeordnet sind, um einen absinkenden Flüssigkeitsstrom begleitet von einem aufsteigenden Dampfstrom aufzunehmen, um einen Dampf-Flüssigkeitskontakt zwischen sich zur Masse- und/oder Wärmeübertragung hervorzurufen, wobei die Bleche jeweils eine Vielzahl von relativ weit beabstandeten Öffnungen (22) aufweisen, um den entlang laufenden Strom des Dampfes und der Flüssigkeit zu beeinflussen, dadurch gekennzeichnet, daß die Bleche aus Streckmaterial bestehen und eine Vielzahl voneinander beabstandeter, länglicher Schlitze (152) aufweisen, wodurch die Flüssigkeit zu gegenüberliegenden Seiten der Bleche (160) fließen kann, und daß die Schlitze gleichförmig verteilt sind und Vorsprungbereiche mit verwundenen Flächen aufweisen, die nach außen gebogen sind, um in dem darüber fließenden Fluidstrom eine Turbulenz zu erzeugen.

2. Turmpackung nach Anspruch 1, dadurch gekennzeichnet, daß die Schlitze (152) in allgemein parallelen Reihen (154) voneinander beabstandet sind.

3. Turmpackung nach Anspruch 1, dadurch gekennzeichnet, daß die Schlitze (152) zu den in Längsrichtung versetzten Schlitzen benachbarter Reihen so angeordnet sind, daß sie auf die Zwischenräume zwischen den benachbarten Schlitzen in einer versetzten Reihenanordnung ausgerichtet sind.

4. Turmpackung nach einem der vorhergehenden Ansprüche, dadurch gekennzeichnet, daß die gegenüberliegenden Wellungen (17) allgemein orthogonal zueinander geneigt sind und daß sich die länglichen Schlitze (152) senkrecht zur Achse der Turmpackung erstrecken.

5. Turmpackung nach einem der vorhergehenden Ansprüche, dadurch gekennzeichnet, daß jeder der länglichen Schlitze einen geprägten Abschnitt aufweist, der von der Ebene des Bleches nach außen vorsteht und sich von dem Schlitz in Richtung des Flüssigkeitsstromes entlang des Bleches erstreckt.

6. Turmpackung nach Anspruch 5, dadurch gekennzeichnet, daß die geprägten Abschnitte der Schlitze in abwechselnden Reihen von der Ebene des Bleches in entgegengesetzten Richtungen vorstehen.

7. Turmpackung nach einem der vorhergehenden Ansprüche, dadurch gekennzeichnet, daß die gewellten Bleche in frontalem Kontakt angeordnet sind.

8. Turmpackung nach einem der Ansprüche 1 bis 6, dadurch gekennzeichnet, daß jedes benachbarte Paar gewellter Bleche (14) von einem mit Öffnungen versehenen ebenen Blech (18) getrennt ist, mit dem die gewellten Bleche in frontalem Kontakt stehen. .

9. Turmpackung nach Anspruch 8, dadurch gekennzeichnet, daß die Öffnungen (122) in jedem ebenen Blech Schlitze (152) aufweisen.

10. Verfahren zum Erzeugen eines Dampf-Flüssigkeitskontaktes in einem Prozeßturm, bei dem ein Turm mit einer Einrichtung zum Eintreten eines Dampfstromes in einem unteren Bereich, einer Einrichtung zum Eintreten eines Flüssigkeitsstromes in einem oberen Bereich des Turmes und einer Folge von Schichten von Gitterabschnitten mit allgemein vertikal ausgerichteten, frontal zueinander angeordneten gewellten Blechen vorgesehen ist, wobei die Wellungen benachbarter Bleche zwischen den Einrichtungen zum Eintreten der Flüssigkeit und das Dampfes zueinander abgewinkelt sind, um den absinkenden Flüssigkeitsstrom und den aufsteigenden Dampfstrom zwischen sich aufzunehmen, und die Bleche jeweils eine Vielzahl von verhältnismäßig weit beabstandeten Öffnungen (22) aufweisen, um auf die entlang fließenden Ströme des Dampfes und der Flüssigkeit einzuwirken, dadurch gekennzeichnet, daß die Gitterschichten mit mehreren Streckmetallblechen versehen werden, daß die Bleche in entgegengesetzt geneigten Positionen angeordnet werden, daß in den Blechen eine Vielzahl von parallelen, länglichen, voneinander beabstandeten Schlitzen (152) ausgebildet wird und daß die Schlitze mit Vorsprungsbereichen mit verwundenen Flächen versehen werden, die nach außen gebogen sind, um in der herabfließenden und durch die Bleche hindurchtretenden Flüssigkeit zusätzlich zu einem Querverteilungseffekt eine Turbulenz zu erzeugen.

11. Verfahren nach Anspruch 10, dadurch gekennzeichnet, daß die Schlitze in benachbarten parallelen Reihen (154) ausgebildet werden, wobei jeder Schlitz auf einen Zwischenraum zwischen Schlitzen in benachbarten Reihen ausgerichtet wird, um den Verteilungseffekt auf die entlang des Bleches herabfließende Flüssigkeit zu erhöhen.

**Revendications**

1. Matériau de remplissage pour colonnes, comprenant un empilage de tôles métalliques ondulées (14, 150) disposées face à face, dont les ondulations situées en vis-à-vis sont inclinées dans des directions opposées l'une à l'autre et qui sont agencées de manière à recevoir un écoulement de liquide descendant et, de façon concomitante, un écoulement de vapeur ascendant afin d'établir un contact entre la vapeur et le liquide en vue de l'obtention d'un transfert de masse et/ou d'un transfert thermique, lesdites tôles comportant chacune une pluralité d'ouvertures espacées (22), relativement étendues et ménagées de manière à perturber l'écoulement de la vapeur et du liquide le long des tôles, caractérisé en ce que les tôles sont réalisées en un matériau déployé et incluent une pluralité de fentes allongées et espacées (152), permettant au liquide de circuler en direction de faces opposées desdites tôles (160), lesdites fentes étant réparties uniformément et comportant des parties en forme de languettes comprenant des éléments de surface tordus, recourbés vers l'extérieur à partir des tôles de manière à appliquer une turbulence à l'écoulement du fluide circulant au-dessus de ces parties en forme de languettes.

2. Matériau de remplissage pour colonnes selon la revendication 1, caractérisé en ce que lesdites fentes (152) sont espacées les unes des autres en étant disposées suivant des rangées (154), qui, d'une manière générale, sont parallèles.

3. Matériau de remplissage pour colonnes selon la revendication 1, caractérisé en ce que les fentes (152) sont ménagées de manière à être situées dans des rangées voisines décalées longitudinalement les unes par rapport aux autres de manière à être en alignement avec les espaces présents entre les fentes voisines, selon une configuration en forme de réseau échelonné.

4. Matériau de remplissage pour colonnes selon l'une quelconque des revendications précédentes, caractérisé en ce que lesdites ondulations (17) situées en vis-à-vis sont inclinées de manière à être, d'une manière générale, perpendiculaires les unes aux autres, et lesdites fentes allongées (152) s'étendent perpendiculairement à l'axe du matériau de remplissage pour colonnes.

5. Matériau de remplissage pour colonnes selon l'une quelconque des revendications précédentes, caractérisé en ce que chacune desdites fentes allongées comprend une partie repoussée, qui fait saillie à l'extérieur du plan de ladite tôle et s'étend à partir de ladite fente dans la direction d'écoulement du liquide le long de ladite tôle.

6. Matériau de remplissage pour colonnes selon la revendication 5, caractérisé en ce que les parties repoussées des fentes de rangées alternées font saillie à l'extérieur du plan de ladite tôle, dans des directions opposées.

7. Matériau de remplissage pour colonnes selon l'une quelconque des revendications précédentes, caractérisé en ce que lesdites tôles ondulées sont disposées de manière à être en contact face à face.

8. Matériau de remplissage pour colonnes selon l'une quelconque des revendications 1 à 6, caractérisé en ce que les tôles ondulées adjacentes (14) sont séparées par une tôle plane ajourée (18), avec laquelle lesdites tôles ondulées sont en contact face-à-face.

9. Matériau de remplissage pour colonnes selon la revendication 8, caractérisé en ce que les ouvertures (122) ménagées dans chaque tôle plane comprennent des fentes (152).

10. Procédé pour établir un contact vapeur-liquide à l'intérieur d'une colonne de traitement, incluant les étapes consistant à utiliser une colonne comportant des moyens pour faire pénétrer l'écoulement de vapeur au niveau de sa partie inférieure, des moyens pour faire pénétrer un écoulement de liquide au niveau de sa partie supérieure et une série de couches de sections de grilles constituées par des tôles ondulées (14) orientées d'une manière générale verticalement et disposées face à face, les ondulations de tôles adjacentes étant inclinées les unes par rapport aux autres entre lesdits moyens d'introduction du liquide et de la vapeur de manière à recevoir entre elles, d'une manière concomitante, l'écoulement descendant de liquide et l'ecoulement ascendant de vapeur, lesdites tôles comportant une pluralité d'ouvertures espacées (22) relativement étendues, destinées à perturber l'écoulement de la vapeur et du liquide le long des tôles, caractérisé en ce qu'il inclut les étapes consistant à équiper lesdites couches en forme de grilles, d'une pluralité de tôles en métal déployé, positionner lesdites tôles dans des positions possédant des inclinaisons opposées les unes par rapport aux autres, ménager dans lesdites tôles une pluralité de fentes allongées parallèles et espacées (152), ces fentes étant munies de parties en forme de languettes comprenant des éléments de surface tordus, recourbés vers l'extérieur à partir des fentes de manière à appliquer une turbulence, ainsi qu'un effet d'étalement transversal, au liquide descendant entre lesdites tôles.

11. Procédé selon la revendication 10, incluant l'aménagement desdites fentes selon des rangées voisines parallèles (154), chaque fente étant alignée avec un espace présent entre des fentes situées dans les rangées adjacentes de manière à améliorer l'effet d'étalement du liquide descendant le long de ladite tôle.

FIG. 1

FIG. 2

FIG. 3

1

FIG. 1A

FIG. 2A

FIG. 3A

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19